# EUROPÄISCHE PATENTSCHRIFT

(11) **EP 1 932 715 B1**
(45) Veröffentlichungstag und Bekanntmachung des Hinweises auf die Patenterteilung: **30.12.2009**
(21) Anmeldenummer: 07019690.2
(22) Anmeldetag: 09.10.2007
(51) Int. Cl.: B60N 2/44, B60N 2/66

(54) **Fahrzeugsitz mit einer pneumatischen Lordose**
Vehicle seat with pneumatic lordosis
Siège de véhicule doté d'une lordose pneumatique

(30) Priorität: 16.12.2006 DE 102006059540
(43) Veröffentlichungstag der Anmeldung: 18.06.2008
(73) Patentinhaber: Volkswagen Aktiengesellschaft, 38436 Wolfsburg (DE)
(72) Erfinder: Delavoye, Carole, 38446 Wolfsburg (DE); Schweissgut, Jakob, 38542 Leiferde (DE); Tietz, Volker, 38446 Wolfsburg (DE)

(56) Entgegenhaltungen:
- DE-A1- 19 938 698
- DE-C1- 19 534 660

## Beschreibung

Die Erfindung betrifft einen Fahrzeugsitz mit einer pneumatischen Lordose mit den Merkmalen des Oberbegriffs des Anspruchs 1.

Ein derartiger Fahrzeugsitz ist aus der DE 195 34 660 C1 bekannt.

Zur Veränderung von Fahrzeugsitzen werden in zunehmendem Maße im Fahrzeugsitz integrierte Luftkissen eingesetzt. Damit können beispielsweise Seitenkonturen des Sitzes ohne mechanisch bewegte Teile verändert werden, es können Lordosestützen geschaffen und auch Massagesysteme für Fahrzeugsitze realisiert werden.

Bei bekannten Fahrzeugsitzen dieser Art, beispielsweise der DE 195 34 660 C1 und der DE 199 34 472 A1, sind zur Einstellung einer gewünschten Sitzkontur im Lordosebereich der Rückenlehne drei Luftkissen in Lehnenhöhe gesehen übereinander angeordnet, die von einem Steuergerät zur Fülldruckeinstellung und zum Fülldruckhalten gesteuert werden.

Weitere pneumatische Lordosensysteme gehen aus der US 3,540,776 A1 der DE 30 37 659 C2 und der DE 38 30 235 C2 hervor.

Die US 3,540,776 A1 beschreibt eine Rückenstütze bestehend aus einer Hülle oder einem Bezug mit einer Vielzahl von sich transversal erstreckenden, nebeneinander angeordneten, im Wesentlichen rechteckigen geschlossenen Taschen, die miteinander entlang von Längskanten verbunden sind, wobei die Taschen im Wesentlichen die gleiche Länge in ihrer Längsrichtung und eine verschiedene Breite von der Unterseite zur Oberseite der Rückenstütze aufweisen. In jeder Tasche ist ein separates aufblasbares Kissen vorgesehen.

Die DE 30 37 659 C2 offenbart eine Rückenstütze für eine Rückenlehne für Fahrzeugsitze mit mindestens einem aufblasbaren Kissen aus flexiblem, luftdichten Material mit mehreren, auch miteinander verbundenen, Kammern, wobei das Kissen neben einem sich dem Wirbelsäulenverlauf stützend anpassenden Mittelteil seitlich an diesem um vertikale Achsen schwenkbewegliche Stützkörper aufweist, wobei ein in der Höhe frei verstellbarer und auswechselbarer Stützkern im mittleren, unteren Bereich des Kissens, also im Andruckgebiet des Beckens und der Lendenwirbel eines Benutzers, vorgesehen ist und die seitlichen Stützkörper in der Höhe dieses Bereiches zwischen oberen und unteren über die Breite des Kissens verlaufenden Aufblaskammern angeordnet sind.

Aus der DE 38 30 235 C2 kennt man eine Rückenlehne an Fahrer-, Beifahrer- oder Fahrgastsitzen in Personen- oder Nutzfahrzeugen mit in der Rückenlehne integrierten, mit einem flüssigen oder gasförmigen Medium beaufschlagbaren Kammern, die wahlweise einzeln und unabhängig voneinander auch programmgesteuert be- und entlastet werden können, wobei auch Amplitude und Frequenz variierbar sind, wobei in Längsrichtung der Rückenlehne über die Zeit unterschiedlich mit Medium beaufschlagbare Kammern hintereinander angeordnet und über Druckbegrenzungsventile derart miteinander verbunden sind, dass bei Beaufschlagung mit dem Medium eine abschnittsweise die Amplitude verändernde Mediumwalze entlang der Rückenpartie des Fahrers, Beifahrers oder Fahrgastes abrollt.

Bei den meisten durch pneumatische Luftkissen oder Blasen veränderbaren Polsterformen, insbesondere denen aus der US 3,540,776 A1, der DE 38 30 235 C2 sowie der DE 199 34 472 A1 und der DE 195 34 660 C1, ergibt sich ein Querschnitt der sich etwa ballig-ellipsenförmig in Richtung des Rückens des Sitzenden ausdehnt. Hierdurch ergibt sich das Problem, dass diese Luftpolster in ihrer Mitte stärker gewölbt sind als an ihren Enden. Hierdurch wird die Wirbelsäule des Sitzenden weiter weg gedrückt der Mittelbereich also stärker gewölbt, während die Seitenbereiche weniger stark gewölbt sind.

Der Erfindung liegt die Aufgabe zugrunde, einen Fahrzeugsitz der eingangs genannten Art mit einem aufblasbarem Kissen zu schaffen, der jedem Benutzer über längere Zeit eine gute Unterstützung in einer gesunden und entspannten Sitzstellung sowie einen optimalen seitlichen Halt unter gesundheitsschonender Aufnahme der Wirbelsäule, insbesondere dem Lordosebereich der Wirbelsäule, gewährleistet.

Einen ersten Ansatzpunkt dafür bietet die Patentschrift DE 30 37 659 C2, welche seitliche Stützkörper an einem Stützkern vorschlägt. Die Anordnung von Stützkern und aufblasbaren Stützkörpern ist jedoch relativ kompliziert und soll mit der nachfolgenden Erfindung vereinfacht und verbessert werden.

Die Aufgabe wird in Verbindung mit den Merkmalen des Oberbegriffs des Patentanspruchs 1 dadurch gelöst, dass mindestens ein Luftkissen, um den Lordosebereich eines Aufsitzenden schalenartig zu umfangen, im Lordosebereich entlang der in z-Richtung verlaufenden Wirbelsäule des Aufsitzenden eine Einschnürung in x-Richtung Fahrtrichtung oder eine Einschnürung in x-Richtung Fahrtrichtung und eine Taillierung in z-Richtung aufweist, wodurch der Wirbelsäulen-Lordösebereich des Rückenlehnenpolsters zwischen einer Ausstellposition und einer Nichtausstellposition des mindestens einen Luftkissens eine geringere Ausstellung als die Seiten-Lordosebereiche des Rückenlehnenpolsters erfährt. Dies verbessert die Druckverteilung des Anlagebereiches des Rückens des Aufsitzenden. Es ist jedoch kein direkter Druck auf der Wirbelsäule vorhanden, sondern dieser Druckbereich entwickelt sich rechts und, links der Wirbelsäule, Somit wird eine Verbesserung der Ergonomie erreicht.

In bevorzugter Ausgestaltung der Erfindung ist das mindestens eine Luftkissens in Nichtausstellposition mit mindestens einem entlang der Wirbelsäule [z-Richtung] des Aufsitzenden angeordneten Spannelement versehen, so dass das mindestens eine Luftkissen in seiner Ausstellposition in Richtung der Wirbelsäule des Aufsitzenden [x-Richtung] eingeschnürt ist.

Ferner ist das mindestens eine Luftkissen in weiterer bevorzugter Ausgestaltung der Erfindung nahe des Wirbelsäulen-Lordosebereiches entlang der Wirbelsäule [z-Richtung] mindestens einseitig konvex ausgeformt, so dass das mindestens eine Luftkissen in Ausstellposition entlang der Wirbelsäule [z-Richtung] des Aufsitzenden tailliert ist.

Bevorzugt ist eine übereinander liegende Anordnung von mehreren Luftkissen im Lordosebereich des Rückenlehnepolsters entlang der Wirbelsäule des Aufsitzenden [z-Richtung], wobei die Luftkissen gemeinsam durch das mindestens eine Spannelement in x-Richtung eingeschnürt oder gemeinsam durch das mindestens eine Spannelement in x-Richtung eingeschnürt und zusätzlich jeweils mindestens einseitig konvex in z-Richtung ausgeformt sind.

Die Erfindung löst gleichzeitig das Problem der Fixierung des oder der Luftkissen in der Rückenlehne dadurch, dass das mindestens eine Luftkissen im Lordosebereich des Rückenlehnenpolsters an mindestens einem rückenlehnenfesten Fixierelement befestigt ist.

Erfindungsgemäß dient als erstes Fixierelement zur Befestigung des mindestens einen Luftkissens mindestens ein rückenlehnenfestes Drahtgestell.

Eine bevorzugte Ausgestaltungsvariante besteht jedoch darin, als zweites Fixierelement zur Befestigung des mindestens einen Luftkissens eine Filzmatte vorzusehen, die an dem rückenlehnenfesten Drahtgestell befestigt ist.

Schließlich hat sich herausgestellt, dass als drittes Fixierelement zur Befestigung des mindestens einen Luftkissens und zur Sicherung einer homogenen Anlagefläche des mindestens einen Luftkissens ein Schild, insbesondere ein Kunststoff-Schild, insbesondere ein flexibles Kunststoff-Schild angeordnet ist, das an dem rückenlehnenfestes Drahtgestell befestigt ist, wobei auf dem Schild entweder das mindestens eine Luftkissen direkt oder die Filzmatte mit dem daran angeordneten mindestens einen Luftkissen indirekt angeordnet ist.

Weitere bevorzugte Ausgestaltungen der Erfindung ergeben sich aus den übrigen, in den Unteransprüchen genannten Merkmalen.

Die Erfindung wird nachfolgend an einem Ausführungsbeispiel im Wesentlichen anhand von Zeichnungen eines Rückenlehnenpolsters mit einer pneumatischen Lordose näher erläutert.

Zum besseren Verständnis wurden zur Erläuterung kartesische Richtungspfeile dargestellt, wobei die x-Richtung in Fahrtrichtung, die y-Richtüng quer zur Fahrtrichtung liegt und die z-Richtung die vertikale Richtung in einem Kraftfahrzeug bedeutet.

Im Nachfolgenden zeigt
- Figur 1: einen Fahrzeugsitz in einer schematischen Darstellung einer Vorderansicht;
- Figur 2: den Fahrzeugsitz in einer schematischen Darstellung in einer Seitenansicht;
- Figur 3: eine Luftkissenanordnung als Lordosesystem in einer Rückenlehne in einer Draufsicht;
- Figur4: das Lordosesystem an der Rückenlehne in einer Vorderansicht;
- Figur 5A: die Ausbildung eines einzelnen Luftkissens in einer ersten Ausführungsvariante;
- Figur 5B: die Ausführung und Anordnung mehrerer Luftkissen in der ersten Ausführungsvariante;
- Figur 6A: die Ausführung eines einzelnen Luftkissens in einer zweiten Ausführungsvariante;
- Figur 6B: die Anordnung und Ausformung mehrerer Luftkissen in der zweiten Ausführungsvariante;
- Figur 7A: die Fixierung der Luftkissen anhand der ersten Luftkissen-Ausführungsvariante an dem Gestell der Rückenlehne in einer Vorderansicht und
- Figur 7B: die Fixierung der Luftkissen anhand der ersten Luftkissen-Ausführungsvariante an dem Gestell der Rückenlehne in einer perspektivischen Ansicht.

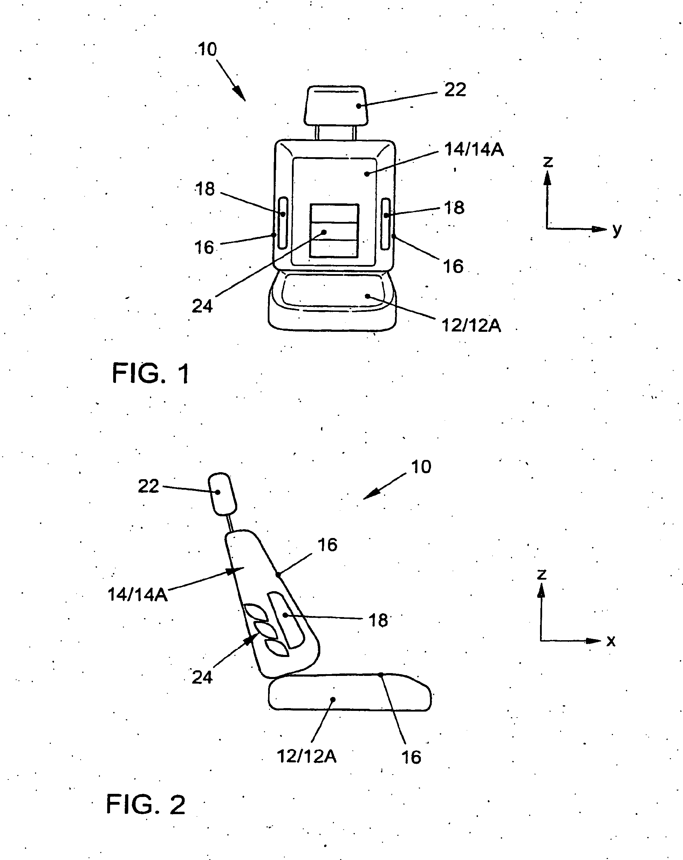

Figur 1 zeigt zunächst einen Fahrzeugsitz 10, der ein Sitzteil 12 mit einem Sitzteilpolster 12A und eine Rückenlehne 14 mit einem Rückenlehnenpolster 14A umfasst, wobei auf der Rückenlehne 14 eine Kopfstütze 22 angeordnet ist. Im Rückenlehnenpolster 14A ist beispielhaft, wie bei komfortablen Fahrzeugsitzen ausgeführt; ein Lordosesystem 24 dargestellt, wobei das Rückenlehnenpolster 14A zusätzlich beidseitig Seitenwangenpolster 16 aufweist, in denen beispielsweise jeweils pneumatische Luftkissenkammern 18 zur Seitenwangenverstellung angeordnet sind.

Figur 2 zeigt den selben Fahrzeugsitz 10 mit gleichen Bauteilen und zugehörigen Bezugszeichen in einer Seitenansicht, wobei dargestellt ist, dass das Sitzteilpolster 12A analog zum Rückenlehnenpolster 14A ebenfalls Seitenwangeripolster 16 aufweisen kann beziehungsweise aufweist, wobei die anordbaren pneumatischen Luftkissen nicht dargestellt sind.

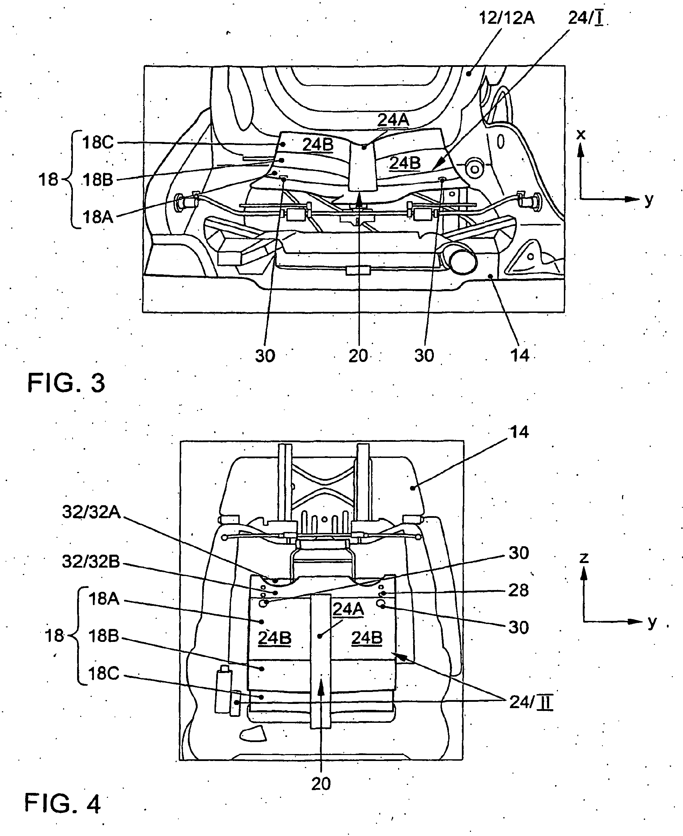

Figur 3 zeigt das Lordosesystem 24 in einer Draufsicht auf die Rückenlehne 14.

In Figur 3 noch nicht sichtbar, ist in der Rückenlehne 14 ein erstes Fixierelement 32A angeordnet, welches vorzugsweise als Drahtgestell 32A zwischen den Seitenbereichen der Rückenlehne 14 ausgeführt ist. An diesem Drahtgestellt 32A sind die Luftkissenkammern 18A, 18B, 18C anordbar, wie jedoch in Figur 3 sichtbar ist, sind die Luftkissenkammern 18A, 18B; 18C auf einem zweiten Fixierelement 32B, einer Filzmatte, angeordnet, wobei die Filzmatte 32B ihrerseits an dem Drahtgestell 32A befestigt ist.

In Figur 3 ist ein links und rechts angeordnetes Befestigungselement 30 sichtbar, welches in Lochungen 28 der Filzmatte 32B eingreift, so dass die erste Luftkissenkammer 18A, wie in Figur 4 sichtbar, an der Filzmatte 32B befestigbar ist. Die weiteren Befestigungselemente 30 liegen durch Überlappung der ersten Luftkissenkammer 18A über der zweiten Luftkissenkammer 18B und Überlappung der zweiten Luftkissenkammer 18B über der dritten Luftkissenkammer 18C unterhalb der jeweiligen Luftkissenkammern 18A, 18B und sind somit nicht sichtbar.

Die Luftkissenkammern 18A, 18B, 18C sind vorzugsweise jeweils zu 50 % überlappend angeordnet und bilden das Lordosesystem 24 aus, welches eine vorgebbare Fläche ausbildend im Lordosebereich 24 der Wirbelsäule des Aufsitzenden angeordnet ist.

Figur 3 zeigt das Lordosesystem 24 in Nichtausstellposition I, also nicht mit einem Medium pneumatisch beaufschlagt, während Figur 4 das Lordosesystem 24 unter pneumatischer Beaufschlagung eines mediums in einer Ausstellposition II zeigt.

In Nichtausstellposition I wird im Wirbelsäulen-Lordosebereich 24A, der in vertikaler Richtung [z-Richtung] verläuft, ein Spannelement 20 angeordnet, welches im Ausführungsbeispiel in Form eines Spannbandes ausgeführt ist.

Dieses Spannelement 20 ist so ausgelegt, dass es die Luftkissenkammern 18A, 18B, 18C in Nichtaüsstellposition I derart umspannt beziehungsweise abspannt, dass sich in Ausstellposition II, gemäß Figur 4, eine Einschnürung der pneumatisch beaufschlagten Luftkissenkammern 18A, 18B, 18C ergibt.

Dazu ist, wie Figur 4 zeigt, das Spannband 20 im oberen Bereich durch Öffnungen in der Filzmatte 32B hindurchgeführt und vorzugsweise an einem quer verlaufenden Draht des Drahtgestelle 32A befestigt. Im, unteren Bereich ist das Spannband beispielsweise um die Filzmatte 32B herumgeschlagen und an einem ebenfalls wie oben quer liegenden Draht des Drahtgestells 32A befestigt.

Die Einschnürung der pneumatisch beaufschlagten Luftkissenkammern 18A, 18B, 18C erfolgt sobald der Insasse das System in Betrieb nimmt und die Luftkissen 18 beaufschlagt. Die Einschnürung nimmt somit zwischen Nichtausstellposition 1 und Ausstellposition 11 stetig zu.

In der pneumatisch beaufschlagten Ausstellposition II ergibt sich somit der Effekt, dass die Luftkissen 18 die Wirbelsäule des Aufsitzenden nicht in Fahrtrichtung [x-Richtung] wegdrücken, sondern nur die Seiten-Lordosebereiche 24B in die Ausstellposition 11 übergehen und somit den Rücken, insbesondere den Lordosebereich des Aufsitzenden, schalenförmig umfangen. Es erfolgt somit kein direkter Druck auf die Wirbelsäule.

Der mögliche Stellweg der Luftkissenkammern 18, gemäß der Figur 4, beträgt im Seiten-Lordosebereich 24B circa 40 mm in x-Richtung, also in Fahrtrichtung, bei 100 %-iger Beaufschlagung. Bei Teilbeaufschlagung entsprechend darunter. Somit können die verschiedenen kyphotischen oder lordotischen Rückenformen definiert angepasst werden.

Die Luftkissenkammern 18 selbst können in verschiedenen Ausformungen ausgeführt werden.

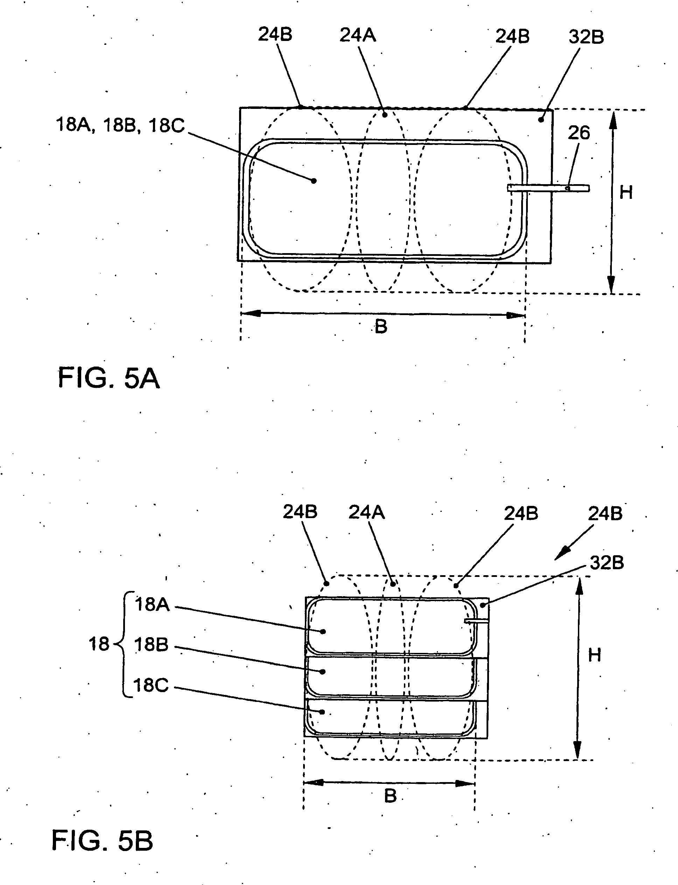

Die Figuren 5A und 5B zeigen in einer ersten Ausführungsvariante eine einzelne Luftkissenkammer 18, die jeweils als erste, zweite oder dritte Luftkissenkammer 18A, 18B, 18C einsetzbar ist. Jede Luftkissenkammer 18 weist dabei einen Pneumatikanschluss 26 auf, wobei Figur 5A das einzelne Luftkissen 18 zeigt und Figur 5B die übereinander geordnete Anordnung von mehreren Luftkissen 18, die in den Figuren 5A und 5B im Wesentlichen rechteckig ausgeführt sind.

Dieses in der Figur 5A dargestellte einzelne Luftkissen 18 hat beispielsweise ein Breite B von circa 270 mm und eine Höhen H von circa 100 mm. Bei entsprechender 50 %-iger Überlappung ergibt sich somit eine Gesamthöhe H, Figur 5B, von circa 200 mm mit einer Breite von 270 mm im Lordosebereich 24A, 24B des Aufsitzenden. Der gesamte Lordosebereich 24 umfasst somit eine Fläche von H x B beispielsweise circa 200 x 270 mm.

Die in den Figuren 5A und 5B dargestellten ellipsenförmigen Bereiche zeigen den im Wesentlichen vertikalen Wirbelsäulenlordosebereich 24A, in dem die Einschnürung mit dem Spannband 20 erfolgt und die in horizontaler Richtung der Rückenlehne ausgedehnten Seiten-Lordosebereiche 24B, die in der Ausstellposition II den Rücken des Aufsitzenden schalenförmig umfangen.

Mittels der "rechteckigen" Ausführung der Luftkissen der ersten Ausführungsvariante und unter Zugrundelegung der Maße H x B 200mm x 270 mm beträgt der Stellweg As circa 40 mm (nicht dargestellt).

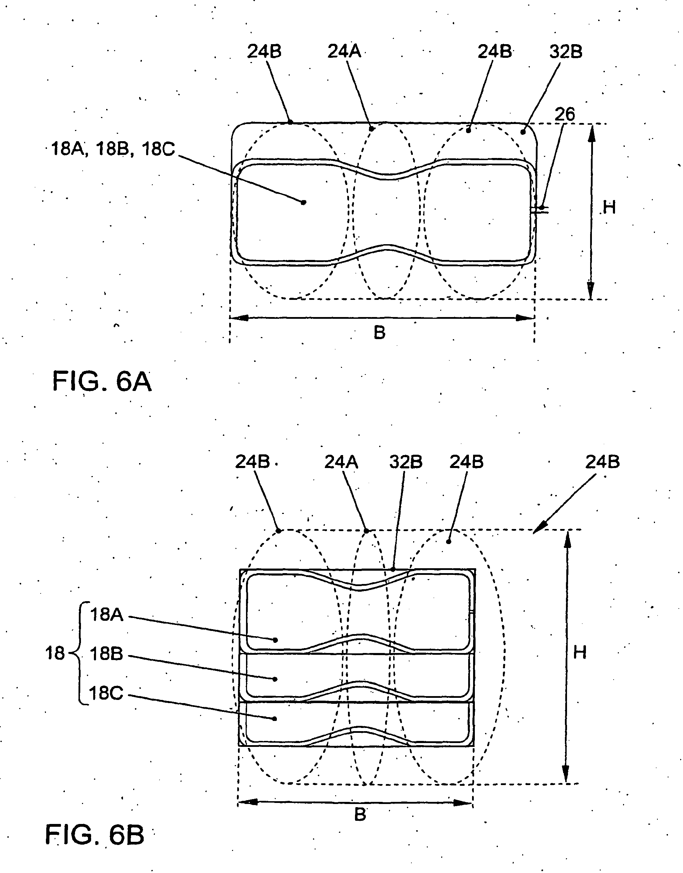

Die Figuren 6A und 6B zeigen eine zweite Ausführungsvariante mit einer einzelnen Luftkissenkammer 18, welche im Wirbelsäulen-Lordosebereich 24A eine mindestens einseitige, hier jedoch beidseitige, konvexe Ausformung aufweist.

Diese konvexe Ausformung bewirkt eine Taillierung der jeweiligen Luftkissenkammer 18A, 18B, 18C, so dass, wie Figur 6B zeigt, auch diese Taillierung bei entsprechender Überlappung für das gesamte Lordosesystem 24 zur Wirkung kommt.

Durch diese "knochenförmige" Ausgestaltung eines einzelnen Luftkissens 18 beziehungsweise der mehreren übereinander geordneten Luftkissen 18 ergibt sich die erleichterte Möglichkeit der Einschnürung mittels Spannband 20 und eine vorteilhafte Be- und Entlüftung der Luftkissen 18, die insbesondere ein schnelleres Be- und Entlüften mit einem geringeren benötigten Medium-(Luft)-Volumen erreicht, wobei zudem durch die Taillierung die auf das Spannband 20 wirkenden Kräfte des oder der Luftkissen 18 reduziert werden.

Die Maße H x B der zweiten Ausführungsvariante in den Figuren 6A und 6B entsprechen im Wesentlichen den genannten Maßen der Figuren 5A und 5B.

Durch die "knochenförmige" Ausführung der zweiten Ausführungsvariante und der damit einhergehenden Taillierung im Wirbelsäulen-Lordosebereich 24A ist bei Beibehaltung der Maße H x B ein Stellweg As (nicht dargestellt) geringfügig reduziert und beträgt beispielsweise im Vergleich zu den Figuren 6A und 6B 35 bis 4040 mm.

Das Lordosesystem 24 mit Einzelluftkissen 18 beziehungsweise mit den übereinander angeordneten Luftkissen 18A, 18B, 18C sind in beiden Ausführungsvarianten Figur 5A, 5B und 6A, 6B beispielsweise auf einem Fixierelement 32, vorzugsweise der Filzmatte 32B dargestellt und angeordnet.

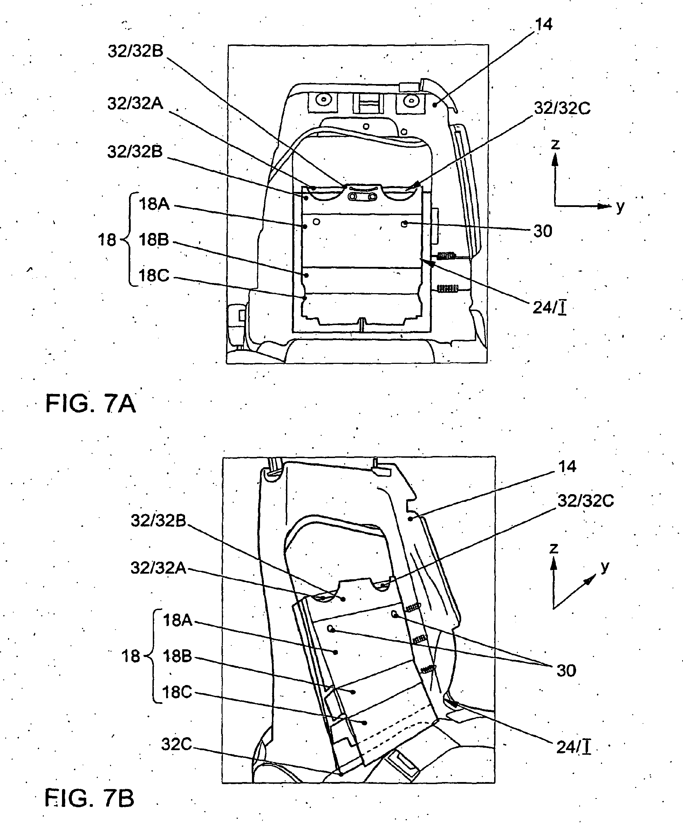

Die Figuren 7A und 7B zeigen nun abschließend das Lordosesystem 24 jeweils in Nichtausstellpösition I in einer Vorderansicht (Figur 7A) und einer perspektivischen Ansicht (Figur 7B). Die Figuren 7A und 7B zeigen das in dem Wirbelsäulen-Lordosebereich 24A angeordnete Spannband 20 zur Einschnürung des Lordosesystems 24 im Lordosebereich jedoch nicht.

Die Luftkissen 18 wurden ferner in der ersten Ausführungsvariante in ihrer im, Wesentlichen rechteckigen Ausführungsform in den Figuren 7A und 7B zur weiteren Darstellung gewählt.

Unterhalb der Filzmatte 32B liegt hier ein Kunststoff-Schild, insbesondere ein Plexiglas-Schild 32C, als drittes Fixierelement, welches durch das erste Fixierelement, das Drahtgestell 32A, in der Rückenlehne 14 gehalten ist.

Dieses Schild 23 C kann auch in der Mitte in y- oder z-Richtung getrennt ausgeführt sein. Bei der Trennung in y-Richtung wird die knochenförmige Form der Luftkissenkammern 18A, 18B, 18C zusätzlich unterstützt. Es können sogar zweiteilige oder mehr als zweiteilige Schilde 23C verwendet werden, um den Seitenlordosebereich 24B beweglicher zu gestalten. So kann ein Schild 23C rechts und ein Schild 32C links der Wirbelsäule verlaufende angeordnet werden.

Auf diesem Plexiglas-Schild 32C ist nun die Filzmatte 32B angeordnet und befestigt, über welche die im Wesentlichen recheckigen Luftkissenkammern 18A, 18B, 18C befestigt sind. Sichtbar sind wiederum die zum ersten Luftkissen 18A gehörenden Befestigungselemente 30 und die Lochungen 28 in der Filzmatte 32B.

Durch diese Lösung ergibt sich ein schichtenartiger Aufbau, wobei selbstverständlich die Luftkissenkammern 18 auch direkt auf dem Plexiglas-Schild 32C befestigt werden könnten.

Die dargestellte Anordnung hat jedoch den Vorteil, dass das Kunststoff-Schild 32C eine flächige homogene Anlage der Luftkissenkammern 18A, 18B, 18C bildet und die Filzmatte 32B Unebenheiten zwischen Plexiglas-Schild 32C und Drahtgestell 32A und den angeordneten Luftkissenkammern 18 ausgleicht und die Filzmatte 32B gleichzeitig als Fixierungselement dient.

Schließlich sind die im Lordosebereich 24, insbesondere im Seiten-Lordosebereich 24B, angeordneten Luftkissen 18A, 18B, 18C durch entsprechende Ansteuerung mit entsprechenden Massagefunktionen erweiterbar, die dann insbesondere die Wirbelsäule selber nicht so stark massieren, jedoch die Seitenbereiche des Lordosebereiches 24 vorteilhaft entspannbar und entlastbar sind.

### Bezugszeichenliste

- 10: Fahrzeugsitz
- 12: Sitzteil
- 12A: Sitzteilpolster
- 14: Rückenlehne
- 14A: Rückenlehnenpolster
- 16: Seitenwangenpolster
- 18.: Luftkissen
- 18A: erste Luftkissenkammer
- 18B: zweite Luftkissenkammer
- 18C: dritte Luftkissenkammer
- 20: Spannelement [Spannband]
- 22: Kopfstütze
- 24: Lordosesystem
- 24A: Wirbelsäulen-Lordosebereich
- 24B: Seiten-Lordosebereich
- 26: Pneumatikanschlüsse
- 28: Lochung
- 30: Befestigungselemente
- 32: Fixiersystem
- 32A: erstes Fixierelement [Drahtgestell]
- 32B: zweites Fixierelement [Filzmatte]
- 32C: drittes Fixierelement [Kunststoff-Schild]
- I: Nichtausstellposition
- II: Ausstellposition
- H: Lordosehöhe
- B: Lordosenbreite
- Δs: Stellweg

## Patentansprüche

1. Fahrzeugsitz, insbesondere Kraftfahrzeugsitz, mit einer Rückenlehne (14) wobei nahe eines Rückenlehnenpolsters (14A) oder im Rückenlehnenpolster (14A) im Lordosebereich (24) der Rückenlehne (14) mindestens ein Luftkissen (18) angeordnet ist, welches durch pneumatische Beaufschlagung aus einer Nichtausstellposition (I) in eine Ausstellposition (II) und zurück bringbar ist, **dadurch gekennzeichnet, dass** das mindestens eine Luftkissen (18A, 18B, 18C), um den Lordosebereich (24) eines Aufsitzenden schalenartig zu umfangen, im Lordosebereich (24) entlang der in z-Richtung verlaufenden Wirbelsäule des Aufsitzenden eine Einschnürung in x-Richtung [Fahrtrichtung] oder eine Einschnürung in x-Richtung [Fahrtrichtung] und eine Taillierung in z-Richtung aufweist, wodurch der Wirbelsäulen-Lordosebereich (24A) des Rückenlehnenpolsters (14A) zwischen der Ausstellposition (II) und der Nichtausstellposition (I) des mindestens einen Luftkissens (18A, 18B, 18C) eine geringere Ausstellung als die Seiten-Lordosebereiche (24B) erfährt.

2. Fahrzeugsitz nach Anspruch 1, **dadurch gekennzeichnet, dass** das mindestens eine Luftkissens (18A, 18B, 18C) in Nichtausstellposition (I) mit mindestens einem entlang der Wirbelsäule [z-Richtung] des Aufsitzenden angeordneten Spannelement (20) versehen ist, so dass das mindestens eine Luftkissen (18A, 18B, 18C) zwischen der Nichtausstellposition (I) und der Ausstellposition (II) in Richtung der Wirbelsäule des Aufsitzenden [x-Richtung] eingeschnürt ist.

3. Fahrzeugsitz nach Anspruch 1, **dadurch gekennzeichnet, dass** das mindestens eine Luftkissens (18A, 18B, 18C) nahe des Wirbelsäulen-Lordosebereiches (24A) entlang der Wirbelsäule [z-Richtung] mindestens einseitig konvex ausgeformt ist, so dass das mindestens eine Luftkissen (18A, 18B, 18C) zwischen der Nichtausstellposition (I) und der Ausstellposition (II) entlang der Wirbelsäule [z-Richtung] des Aufsitzenden tailliert ist.

4. Fahrzeugsitz nach Anspruch 2 und/oder 3, **dadurch gekennzeichnet, dass** das mehrere Luftkissens (18A, 18B, 18C) im Lordosebereich (24) des Rückenlehnepolsters (14A) entlang der Wirbelsäule des Aufsitzenden [z-Richtung] übereinander liegend angeordnet sind, die zwischen Nichtausstellposition (I) und Ausstellposition (II)
• gemeinsam durch das mindestens eine Spannelement (20) in x-Richtung eingeschnürt oder
• gemeinsam durch das mindestens eine Spannelement (20) in x-Richtung [Fahrtrichtung] eingeschnürt und zusätzlich jeweils mindestens einseitig konvex in z-Richtung ausgeformt
sind.

5. Fahrzeugsitz nach mindestens einem der Ansprüche 1 bis 4, **dadurch gekennzeichnet, dass** das mindestens eine Luftkissen (18A, 18B, 18C) im Lordosebereich (24) des Rückenlehnenpolsters (14A) an mindestens einem rückenlehnenfesten Fixierelement (32) befestigt ist.

6. Fahrzeugsitz nach Anspruch 5, **dadurch gekennzeichnet, dass** als erstes Fixierelement zur Befestigung des mindestens einen Luftkissens (18A, 18B, 18C) mindestens ein rückenlehnenfestes Drahtgestell (32A) dient.

7. Fahrzeugsitz nach Anspruch 5 und 6. **dadurch gekennzeichnet, dass** als zweites Fixierelement zur Befestigung des mindestens einen Luftkissens (18A, 18B, 18C) eine Filzmatte (32B) angeordnet ist, die an dem mindestens einen rückenlehnenfestes Drahtgestell (32A) befestigt ist.

8. Fahrzeugsitz nach Anspruch 5 bis 7, **dadurch gekennzeichnet, dass** als drittes Fixierelement zur Befestigung des mindestens einen Luftkissens (18A, 18B, 18C) und zur Sicherung einer homogenen Anlagefläche des mindestens einen Luftkissens (18A, 18B, 18C) ein Schild (32C), insbesondere ein Kunststoff-Schild, angeordnet ist, das an dem rückenlehnenfestes Drahtgestell (32A) befestigt ist, wobei auf dem Schild (32C)
• entweder das mindestens eine Luftkissen (18A, 18B, 18C) direkt oder
• die Filzmatte (32B) mit dem daran angeordneten mindestens einen Luftkissen (18A, 18B, 18C) indirekt angeordnet ist.

9. Fahrzeugsitz nach Anspruch 8, **dadurch gekennzeichnet, dass** das Schild (32) steif oder durch Einschnitte und/oder Ausschnitte und/oder Aussparungen und/oder Ausnehmungen oder dergleichen flexibel ist oder mehrteilig in z-Richtung geteilt und/oder in y-Richtung [quer zur Fahrtrichtung geteilt ausgebildet ist.

## Claims

1. Vehicle seat, in particular motor vehicle seat, with a backrest (14), wherein at least one air cushion (18) is arranged in the vicinity of a backrest cushion (14A) or in the backrest cushion (14A) in the lordosis region (24) of the backrest (14), which air cushion can be brought by pneumatic actuation from a non-deployed position (I) into a deployed position (II) and back, **characterized in that**, in order to surround a seated person's lordosis region (24) in the manner of a shell, the at least one air cushion (18A, 18B, 18C) has, in the lordosis region (24), along the seated person's spinal column which runs in the z direction, a constriction in the x direction [direction of travel] or a constriction in the x direction [direction of travel] and a narrowing in the z direction, as a result of which the spinal column lordosis region (24A) of the backrest cushion (14A) undergoes a smaller deployment than the side lordosis regions (24B) between the deployed position (II) and the non-deployed position (I) of the at least one air cushion (18A, 18B, 18C).

2. Vehicle seat according to Claim 1, **characterized in that**, in the non-deployed position (I), the at least one air cushion (18A, 18B, 18C) is provided with at least one tensioning element (20) arranged along the seated person's spinal column [z direction] such that the at least one air cushion (18A, 18B, 18C) is constricted in the direction of the seated person's spinal column [x direction] between the non-deployed position (I) and the deployed position (II).

3. Vehicle seat according to Claim 1, **characterized in that** the at least one air cushion (18A, 18B, 18C) in the vicinity of the spinal column lordosis region (24A) is shaped convexly at least on one side along the spinal column [z direction] such that the at least one air cushion (18A, 18B, 18C) is narrowed along the seated person's spinal column [z direction] between the non-deployed position (I) and the deployed position (II).

4. Vehicle seat according to Claim 2 and/or 3, **characterized in that** the plurality of air cushions (18A, 18B, 18C) in the lordosis region (24) of the backrest cushion (14A) are arranged lying one above another along the seated person's spinal column [z direction] and, between the non-deployed position (I) and deployed position (II)
• are jointly constricted in the x direction [direction of travel] by the at least one tensioning element (20), or
• are jointly constricted in the x direction [direction of travel] by the at least one tensioning element (20) and in addition are each shaped convexly at least on one side in the z direction.

5. Vehicle seat according to at least one of Claims 1 to 4, **characterized in that** the at least one air cushion (18A, 18B, 18C) is fastened in the lordosis region (24) of the backrest cushion (14A) to at least one fixing element (32) mounted on the backrest.

6. Vehicle seat according to Claim 5, **characterized**
**in that** at least one wire framework (32A) which is mounted on the backrest serves as a first fixing element for fastening the at least one air cushion (18A, 18B, 18C).

7. Vehicle seat according to Claims 5 and 6, **characterized in that** a felt mat (32B) which is fastened to the at least one wire framework (32A) mounted on the backrest is arranged as a second fixing element for fastening the at least one air cushion (18A, 18B, 18C).

8. Vehicle seat according to Claims 5 to 7, **characterized in that** a shield (32C), in particular a plastic shield, which is fastened to the wire framework (32A) mounted on the backrest is arranged as a third fixing element for fastening the at least one air cushion (18A, 18B, 18C) and for securing a homogeneous bearing surface of the at least one air cushion (18A, 18B, 18C), wherein
• either the at least one air cushion (18A, 18B, 18C) is arranged directly or
• the felt mat (32B) with the at least one air cushion (18A, 18B, 18C) arranged thereon is arranged indirectly
on the shield (32C).

9. Vehicle seat according to Claim 8, **characterized in that** the shield (32) is rigid or is flexible by means of incisions and/or cut-out openings and/or cutouts and/or recesses or the like, or is divided into a number of parts in the z direction and/or is designed such that it is divided in the y direction [transversely to the direction of travel].

## Revendications

1. Siège de véhicule, notamment siège de véhicule automobile, doté d'un dossier (14), sachant qu'au moins un coussin d'air (18) est disposé à proximité d'un rembourrage de dossier (14A) ou dans le rembourrage de dossier (14A), dans la zone de lordose (24) du dossier (14), ledit coussin pouvant être amené par injection d'air d'une position non sortie (I) dans une position sortie (II) et inversement, **caractérisé en ce que** l'au moins un coussin d'air (18A, 18B, 18C) comporte, pour entourer à la façon d'une coque la zone de lordose (24) d'une personne assise, un étranglement dans la direction de conduite x ou un étranglement dans la direction de conduite x et un cintrage dans la direction z dans la zone de lordose (24), le long de la colonne vertébrale s'étendant dans la direction z de la personne occupant le siège, la zone de lordose (24A) de la colonne vertébrale du rembourrage de dossier (14A) située entre la position sortie (II) et la position non sortie (I) de l'au moins un coussin d'air (18A, 18B, 18C) offrant une saillie plus limitée que les zones de lordose latérales (24B).

2. Siège de véhicule selon la revendication 1, **caractérisé en ce que** l'au moins un coussin d'air (18A, 18B, 18C) est pourvu, dans la position non sortie (I), d'au moins un élément de serrage (20) disposé le long de la colonne vertébrale [direction z] de la personne occupant le siège, de sorte qu'au moins un coussin d'air (18A, 18B, 18C) est serré entre la position non sortie (I) et la position sortie (II) en direction de la colonne vertébrale de la personne occupant le siège [direction x].

3. Siège de véhicule selon la revendication 1, **caractérisé en ce que** l'au moins un coussin d'air (18A, 18B, 18C) prend une forme convexe sur au moins un côté à proximité de la zone de lordose (24A) de la colonne vertébrale, le long de la colonne vertébrale [direction z], de sorte que l'au moins un coussin d'air (18A, 18B, 18C) est cintré entre la position non sortie (I) et la position sortie (II) le long de la colonne vertébrale [direction z] de la personne occupant le siège.

4. Siège de véhicule selon la revendication 2 et/ou 3, **caractérisé en ce que** plusieurs coussins d'air (18A, 18B, 18C) sont disposés les uns au-dessus des autres dans la zone de lordose (24) du rembourrage de siège (14A), le long de la colonne vertébrale de la personne occupant le siège [direction z], lesdits coussins étant serrés entre la position non sortie (I) et la position sortie (II) :
ensemble à l'aide de l'au moins un élément de serrage (20) dans la direction de conduite x ; ou
ensemble à l'aide de l'au moins un élément de serrage (20) dans la direction de conduite x et prenant en outre respectivement au moins une forme convexe sur un côté dans la direction z.

5. Siège de véhicule selon au moins l'une quelconque des revendications 1 à 4, **caractérisé en ce que** l'au moins un coussin d'air (18A, 18B, 18C) est fixé à au moins un élément de fixation (32) fixe par rapport au dossier dans la zone de lordose (24) du rembourrage de dossier (14A).

6. Siège de véhicule selon la revendication 5, **caractérisé en ce qu'**un cadre métallique (32A) fixe par rapport au dossier sert au moins de premier élément de fixation pour fixer l'au moins un coussin d'air (18A, 18B, 18C).

7. Siège de véhicule selon la revendication 5 et 6, **caractérisé en ce qu'**un tapis en feutre (32B) est utilisé pour servir de deuxième élément de fixation pour fixer l'au moins un coussin d'air (18A, 18B, 18C), ledit tapis étant fixé à l'au moins un cadre métallique (32A) fixe par rapport au dossier.

8. Siège de véhicule selon l'une quelconque des revendications 5 à 7, **caractérisé en ce qu'**un panneau (32C), notamment un panneau en matière synthétique, est disposé pour servir de troisième élément de fixation pour fixer l'au moins un coussin d'air (18A, 18B, 18C) et pour immobiliser une surface d'appui homogène de l'au moins un coussin d'air (18A, 18B, 18C), ledit panneau étant fixé au cadre métallique (32A) fixe par rapport au dossier, sachant que :
soit l'au moins un coussin d'air (18A, 18B, 18C) est disposé directement sur le panneau (32C) ;
soit le tapis en feutre (32B) est prévu indirectement sur l'au moins un coussin d'air (18A, 18B, 18C) disposé dessus.

9. Siège de véhicule selon la revendication 8, **caractérisé en ce que** le panneau (32) est réalisé de façon rigide ou par des entailles et/ou des découpes et/ou des ouvertures et/ou des évidements ou d'autres éléments flexibles ou en plusieurs parties dans la direction z et/ou dans la direction y, perpendiculairement à la direction de conduite.
